# EUROPEAN PATENT APPLICATION

(11) **EP 1 630 639 A1**
(43) Date of publication of application: **01.03.2006**
(21) Application number: 04257793.2
(22) Date of filing: 15.12.2004
(51) Int. Cl.: G06F 1/00, G07F 7/10

(54) **Wireless tags**

(30) Priority: 26.08.2004 JP 2004246295
(71) Applicant: FUJITSU LIMITED, Kawasaki-shi, Kanagawa 211-8588 (JP); Fujitsu Frontech Limited, Inagi-shi, Tokyo 206-8555 (JP)
(72) Inventor: Hashimoto, Shigeru, Inagi-shi Tokyo 206-8555 (JP); Haeno, Tadashi, Inagi-shi Tokyo 206-8555 (JP)
(74) Representative: Hitching, Peter Matthew

(57) **Abstract**

A wireless tag system and a wireless tag access control device make it easy to keep and manage keys of cryptograph with an enhanced level of security. The wireless tag system comprises a plurality of wireless slave tags (1 through 3) which store information encrypted by means of a first key of cryptograph, a wireless master tag (7A) which store the first keys of cryptograph of the slave tags belonging thereto encrypted by means of the second key of cryptograph and a wireless tag access control device which accesses the master tag (7A) and decrypting the first keys of cryptograph acquired from the master tag (7A) by means of the second key of cryptograph and then the tag data acquired from the slave tags (1 through 3) by means of the decrypted first keys of cryptograph.

## Description

### BACKGROUND OF THE INVENTION

### 1. Field of the Invention

This invention relates to a wireless tag system adapted to communications between a plurality of wireless tags (to be also referred to as IC tags hereinafter) and a read/write device and also to a wireless tag access control device, a wireless tag access control method, a wireless tag access control program and a tag that can be used for such a wireless tag system.

### 2. Description of Related Art

As a result of the rapid development of IC technologies in recent years, wireless tag systems using ICs have become very popular and are currently spreading very fast (see, inter alia, Patent Document 1: Japanese Patent Application Laid-Open Publication No. 2003-196360).

With such a wireless tag system, a plurality of wireless tags are attached to respective objects that have to be held under control so that any of the tags can be accessed by way of a read/write device in order to read information from and/or write information to it, thereby systematizing and facilitating the operation of controlling the objects of control.

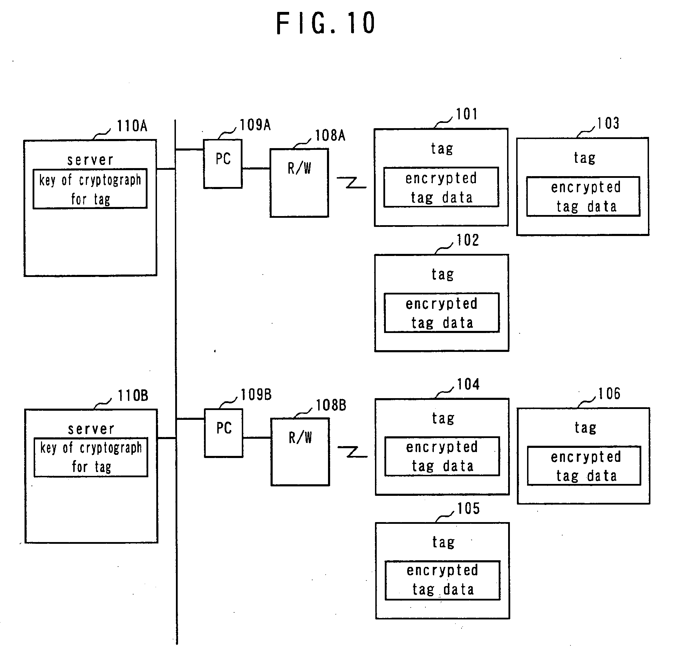

It has been known to encrypt the information (tag data) to be written onto wireless tags (to be simply referred to as tags hereinafter) for the purpose of security of wireless tag systems. FIG. 10 of the accompanying drawings is a schematic block diagram of a wireless tag system adapted to encrypt all tag data by means of a single key of cryptograph, illustrating the entire configuration thereof.

In the wireless tag system of FIG. 10, a number of tags 101 through 103 are connectable to a PC (personal computer) 109A by way of a read/write device 108A. A number of other tags 104 through 106 are connectable to a PC 109B by way of a read/write device 108B. The tag data to be stored in the tags 101 through 106 are encrypted by means of a single common key of cryptograph for tags. PCs 109A, 109B are connected to respective servers 110A, 110B and the key of cryptograph that is used to encrypt tag data is stored in the servers 110A, 110B and provided appropriately to the PCs 109A, 109B.

When the PCs 109A, 109B communicate with the tags 101 through 106 in a system having the above described configuration, the PCs 109A, 109B decrypt the tag data acquired from the tags or encrypt the data to be written to the tags by means of the key of cryptograph for tags for the purpose of security of information.

However, since a single key of cryptograph is used for all the tags with the above-described arrangement, it is no longer appropriate to access any of the tags by means of the key of cryptograph for tags once the key is leaked, or stolen. Therefore, such a system is unsatisfactory from the viewpoint of security.

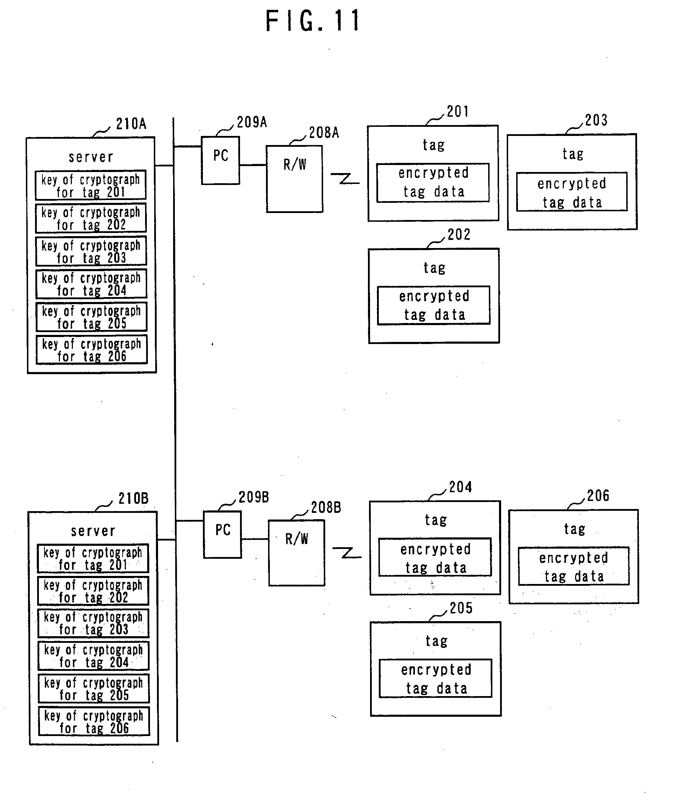

In view of this problem, it is also known to use different keys of cryptograph for respective tags, which are held under control by a server as illustrated in FIG. 11 of the accompanying drawings. With this arrangement, when a PC communicates with a tag, it acquires the key of cryptograph for the tag from the server and decrypt the information stored in the tag or encrypt the information to be written to the tag.

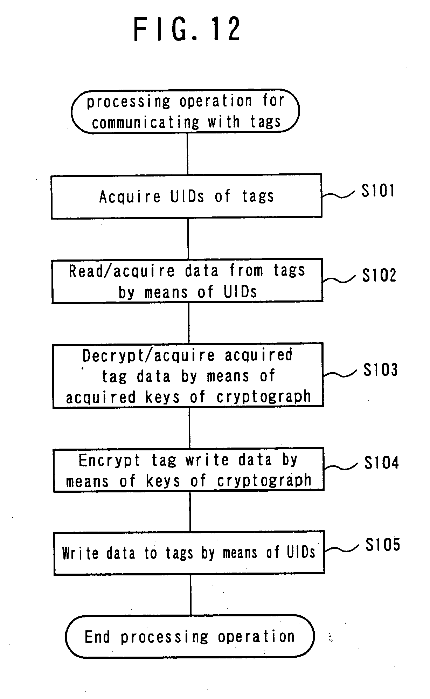

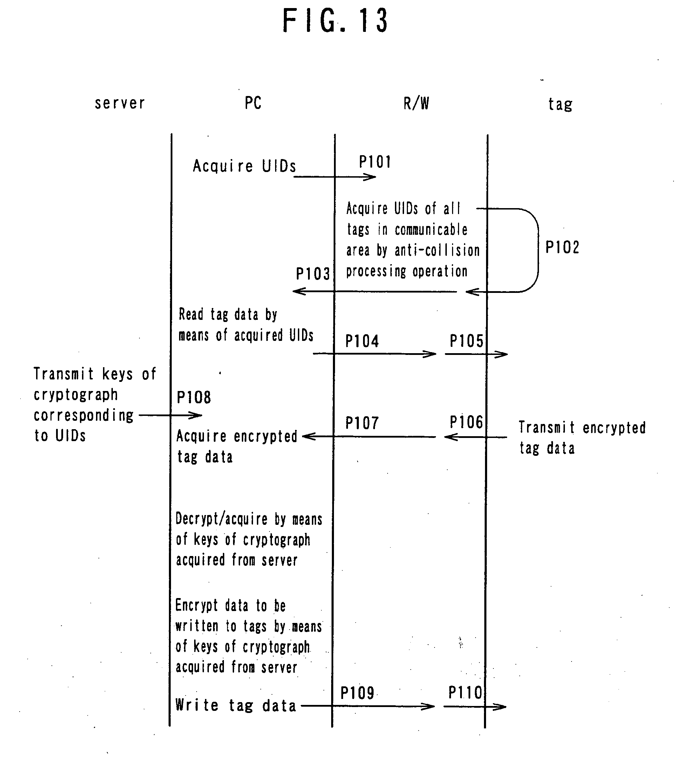

Now, the operation of a system using the known technique of FIG. 11 will be described below by referring to the flow chart of FIG. 12 and the conceptual illustration of the flow of FIG. 13. Note that each step number is prefixed by S in FIG. 12 and by P in FIG. 13. The suffixes A, B for discriminating the two groups in FIG. 11 are omitted in the following description for the simplicity of description.

Firstly, when each of the PCs 209A, 209B (the suffixes A, B for discriminating the two groups are omitted in the following description for the purpose of simplicity of description) communicates with the tags, it outputs an order for acquiring the unique IDs (to be referred to as UIDs hereinafter) of the tags to the read/write device 208 (for an anti-collision processing operation) (P101). The read/write device 208 carries out an anti-collision processing operation according to the order (P102) and acquires the UIDs of all the tags (e.g., the tags 201 through 203 for the PC 209A (the read/write device 208A)) in the communicable area from the tags (P103, Step S102).

As the UIDs are acquired, the PC 209 outputs an order for reading the information in the tags by means of the acquired UIDs to the read/write device 208 (P104). Then, the read/write device 208 transfers the order to the tags (P105). Upon receiving the order, each of the tags transmits its own tag data to the read/write device 208 (P106) and the read/write device 208 receives the encrypted tag data of the tag having its own UID and makes the PC 209 acquire the tag data (P107, Step S102).

Then, the PC 209 acquires the key of cryptograph that corresponds to the UID from the server 210 in order to decrypt the acquired tag data (P108) and then actually decrypts the tag data by means of the acquired key of cryptograph. Thus, in this way, the PC 209 acquires the decrypted tag data (Step S103).

When writing data to a tag, the PC 209 encrypts the data by means of the key of cryptograph for the tag that corresponds to the UID of the tag acquired from the server 210 (Step S104) and outputs an order for writing the encrypted data along with the encrypted data to the read/write device 208 (P109, Step S105). Then, the read/write device 208 transmits the encrypted data to the tag along with the order for writing the encrypted data and causes the tag to write the encrypted data according to the order (P110).

With the above-described arrangement, if a key of cryptograph for a tag is leaked, or stolen, it can be used only for the single tag so that the level of security of the system is dramatically raised if compared with the system illustrated in FIG. 10.

However, when the wireless tag system is applied to the management of a commodity distribution system in place of a bar code system, the number of tags may be enormous and tens of millions of tags may have to be used. If there are a large number of host devices such as servers, there arises a problem that each of the host devices has to keep and manage the keys of cryptograph of the respective tags with difficulty.

### SUMMARY OF THE INVENTION

In view of the above identified problem hitherto known, it is therefore an object of the present invention to provide a wireless tag system with which it is easy to keep and manage keys of cryptograph with an enhanced level of security along with a wireless tag access control device, a wireless tag access control method, a wireless tag access control program and a wireless tag that can be used for such a wireless tag system.

According to the present invention, the above object is achieved by providing a wireless tag system comprising: a plurality of wireless slave tags which store tag data encrypted by means of a first key of cryptograph; a plurality of wireless master tags, each which store the first keys of cryptograph of the slave tags belonging thereto encrypted by means of the second key of cryptograph; and a wireless tag access control device which accesses each of the master tags and decrypts the first keys of cryptograph acquired from the master tags by means of the second key of cryptograph and then the tag data acquired from the slave tags by means of the decrypted first keys of cryptograph.

Preferably, in a wireless tag system according to the present invention, the master tags store the first keys of cryptograph and the UIDs (unique IDs) of the slave tags by correlating them.

Preferably, in a wireless tag system according to the present invention, the UIDs of the slave tags are encrypted by means of the second key of cryptograph and the wireless tag access control device can decrypt the UIDs of the slave tags along with the first keys of cryptograph by means of the second keys of cryptograph and access the slave tags, using the decrypted UIDs. Preferably, the wireless tag access control device can acquire the UIDs of the master tags and then the second keys of cryptograph on the basis of the acquired UIDs.

Preferably, in a wireless tag system according to the present invention, the encryption system using the first keys is encrypted by means of the second keys of cryptograph along with the first keys of cryptograph and stored in the master tags and the wireless tag access control device is adapted to decrypt the encryption system by means of the second keys of cryptograph along with the first keys of cryptograph and decrypt the tag data of the slave tags by means of the decrypted first keys of cryptograph and the decryption system.

Preferably, in a wireless tag system according to the present invention, when the wireless tag access control device accesses the slave tags, the wireless tag access control device acquires the UIDs of the master tags and then acquires the second keys of cryptograph on the basis of the acquired UIDs of the master tags and, at the same time, it accesses the master tags, using the UIDs, and acquires the UIDs of the slave tags and the first keys of cryptograph stored in the master tags so as to decrypt at least the first keys of cryptograph by means of the second keys of cryptograph, access the slave tags, using the acquired UIDs of the slave tags, acquires the tag data and decrypt the acquired tag data by means of the first keys of cryptograph decrypted by means of the second keys of cryptograph.

Preferably, in a wireless tag system according to the present invention, the tag data stored in the slave tags are divided into a plurality of blocks and a first key of cryptograph is defined for each block so that the first keys of cryptograph are stored in the master tags so as to correspond to each of the plurality of blocks and encrypted by means of the second keys of cryptograph defined for the respective blocks.

Preferably, in a wireless tag system according to the present invention, the encryption system using the first keys of cryptograph and defined for each of the blocks is stored in the master tags so as to correspond to each of the plurality of blocks and the wireless tag access control device acquires the first keys of cryptograph and the encryption system by decrypting them by means of the second keys of cryptograph defined so as to correspond to each of the blocks and then decrypts the tag data of the slave tags by means of the first keys of cryptograph and the encryption system that are decrypted.

Preferably, in a wireless tag system according to the invention, the wireless tag access control device encrypts the tag data to be stored in the slave tags by means of the first keys of cryptograph that are acquired from the master tags and decrypted.

In another aspect of the present invention, there is provided a wireless tag access control device adapted to access a plurality of wireless tags including slave tags which store tag data encrypted by means of the first keys of cryptograph and a plurality of master tags which store slave-tag-related information including the UIDs of the slave tags and the first keys of cryptograph, at least the first keys of cryptograph being encrypted by means of the second keys of cryptograph, the device comprising: a master tag information acquiring section which accesses the master tags and acquiring the slave-tag-related information stored in the master tags; a first decrypting section which decrypts the information encrypted by means of the second keys of cryptograph out of the slave-tag-related information acquired by the master tag information acquiring section by means of the second keys of cryptograph acquired to correspond to the master tags; a slave tag data acquiring section which accesses the slave tags by means of the UIDs of the slave tags acquired by the master tag information acquiring section or decrypted and acquired by the first decrypting section and acquiring the tag data encrypted by means of the first keys of cryptograph; and a second decrypting section which decrypts the tag data acquired by the slave tag data acquiring section by means of the first keys of cryptograph decrypted by means of the first decrypting section.

Preferably, in a wireless tag access control device according to the invention, the slave-tag-related information includes the encryption system using the first keys of cryptograph as encrypted by means of the second keys of cryptograph and the first decrypting section decrypts the first keys of cryptographs along with the encryption system by means of the second keys of cryptograph, whereas the second decrypting section decrypts the tag data acquired by the slave tag data acquiring section, using the encryption system along with the first keys of cryptograph.

In still another aspect of the present invention, there is provided a wireless tag access control method adapted to access a plurality of wireless tags including slave tags which store tag data encrypted by means of the first keys of cryptograph and a plurality of master tags which store slave-tag-related information including the UIDs of the slave tags and the first keys of cryptograph, at least the first keys of cryptograph being encrypted by means of the second keys of cryptograph, the method comprising: a master tag information acquiring step which accesses the master tags and acquiring the slave-tag-related information stored in the master tags; a first decrypting step which decrypts the information encrypted by means of the second keys of cryptograph out of the slave-tag-related information acquired in the master tag information acquiring step by means of the second keys of cryptograph acquired to correspond to the master tags; a slave tag data acquiring step which accesses the slave tags by means of the UIDs of the slave tags acquired in the master tag information acquiring step and acquiring the tag data encrypted by means of the first keys of cryptograph; and a second decrypting step which decrypts the tag data acquired in the slave tag data acquiring step by means of the first keys of cryptograph decrypted in the first decrypting step.

Preferably, in a wireless tag access control method according to the present invention, the slave-tag-related information stored in the master tags includes the encryption system using the first keys of cryptograph as encrypted by means of the second keys of cryptograph and the first decrypting step is adapted to decrypt the first keys of cryptographs along with the encryption system by means of the second keys of cryptograph, whereas the second decrypting step is adapted to decrypt the tag data acquired in the slave tag data acquiring step, using the encryption system along with the decrypted first keys of cryptograph.

In still another aspect of the present invention, there is provided a wireless tag access control program which drives a computer to execute a wireless tag access control method adapted to access a plurality of wireless tags including slave tags which store tag data encrypted by means of the first keys of cryptograph and a plurality of master tags which store slave-tag-related information including the UIDs of the slave tags and the first keys of cryptograph, at least the first keys of cryptograph being encrypted by means of the second keys of cryptographs, the program comprising: a master tag information acquiring step which accesses the master tags and acquiring the slave-tag-related information stored in the master tags; a first decrypting step which decrypts the information encrypted by means of the second keys of cryptograph out of the slave-tag-related information acquired in the master tag information acquiring step by means of the second keys of cryptograph acquired to correspond to the master tags; a slave tag data acquiring step which accesses the slave tags by means of the UIDs of the slave tags acquired in the master tag information acquiring step or decrypted and acquired in the first decrypting step and acquiring the tag data encrypted by means of the first keys of cryptograph; and a second decrypting step which decrypts the tag data acquired in the slave tag data acquiring step by means of the first keys of cryptograph decrypted in the first decrypting step.

Preferably, in a wireless tag access control program according to the present invention, the slave-tag-related information stored in the master tags includes the encryption system using the first keys of cryptograph as encrypted by means of the second keys of cryptograph and the program drives a computer to execute the method in which the first decrypting step is adapted to decrypt the first keys of cryptograph along with the encryption system by means of the second keys of cryptograph, whereas the second decrypting step is adapted to decrypt the tag data acquired in the slave tag data acquiring step, using the encryption system along with the decrypted first keys of cryptograph.

In still another aspect of the present invention, there is provided a wireless tag comprising a wireless antenna and a memory section and adapted to be accessed by a read/write device by means of a wireless signal; the memory section which store UIDs relating to other wireless tags accessible for the read/write device and the first keys of cryptograph which decrypts the information stored in the wireless tags having the UIDs and encrypted by means of the second keys of cryptograph.

Preferably, in a wireless tag according to the invention, the memory section stores the encryption system using the first keys of cryptograph.

Thus, the present invention provides an advantage of easiness of keeping and managing keys of cryptograph with an enhanced level of security. Additionally, the present invention provides another advantage that it is not necessary to store a huge number of UIDs of slave tags collectively in a read/write device and the anti-collision processing operation can be carried out fast.

### BRIEF DESCRIPTION OF THE DRAWINGS

FIG. 1 is a schematic block diagram of a first embodiment of wireless tag system according to the invention, illustrating the overall configuration thereof;
FIG. 2 is a schematic illustration of an exemplar arrangement of a master tag and slave tags;
FIG. 3 is a schematic block diagram of master tags and slave tags, showing the configurations thereof;
FIG. 4 is a flow chart of the operation of the first embodiment;
FIG. 5 is a conceptual illustration of the operation of the first embodiment;
FIG. 6 is a schematic illustration of the contents of the memory of a master tag of a second embodiment;
FIGS. 7A and 7B is schematic illustrations of the contents of the memory of a master tag and those of the memory of a slave tag of a third embodiment;
FIG. 8 is a conceptual illustration of the processing operation for updating the data (the UIDs and the keys of cryptograph for slave tags) on the slave tags registered in a master tag;
FIG. 9 is a conceptual illustration of the processing operation for initializing slave tags and master tags;
FIG. 10 is a schematic block diagram of a wireless tag system of the prior art adapted to encrypt all the tag data by means of a single key of cryptograph, illustrating the overall configuration thereof;
FIG. 11 is a schematic block diagram of another wireless tag signal of the prior art, illustrating the overall configuration thereof;
FIG. 12 is a flow chart of the operation of the prior art system of FIG. 11; and
FIG. 13 is a conceptual illustration of the operation of the prior system of FIG. 11.

### DETAILED DESCRIPTION OF THE PREFERRED EMBODIMENTS

Now, the present invention will be described in greater detail by referring to the accompanying drawings that illustrate preferred embodiments of the invention. First Embodiment

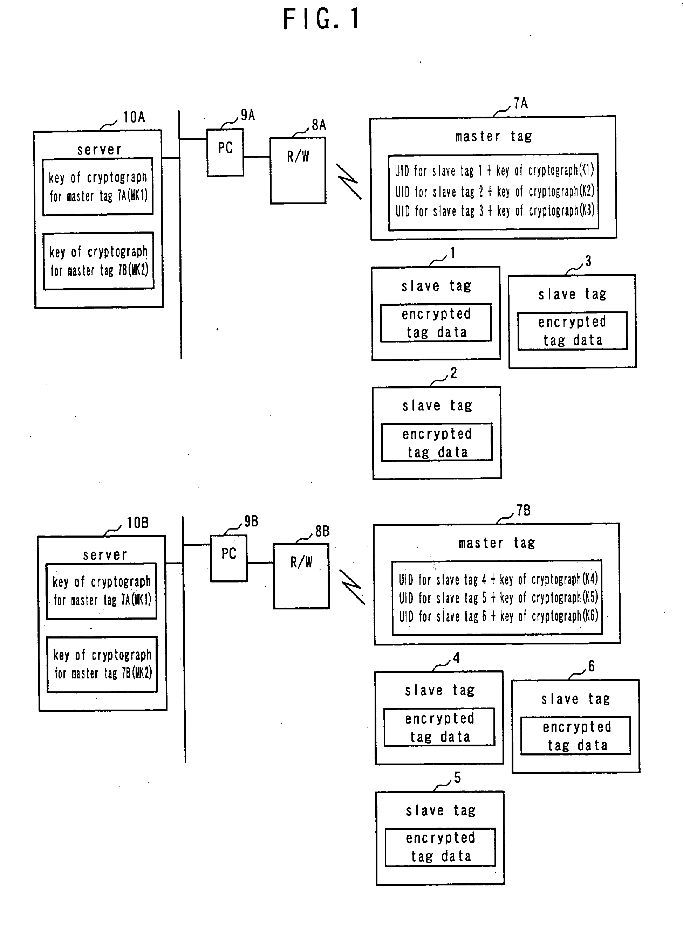

FIG. 1 is a schematic block diagram of the first embodiment of wireless tag system according to the invention, illustrating the overall configuration thereof. Referring to FIG. 1, the wireless tag system comprises a plurality of slave tags that are divided into two groups of slave tags 1 through 3 and slave tags 4 through 6, master tags 7A, 7B provided for the respective groups of slave tags, read/write devices (R/W) 8A, 8B adapted to access the respective groups of the master tag 7A and the slave tags 1 through 3 and the master tag 7B and the slave tags 4 through 6, PCs 9A, 9B that control the respective read/write devices 8A, 8B and servers 10A, 10B that are connected to the respective PCs 9A, 9B so as to hold and manage the keys of cryptograph for the master tags 7A, 7B and give them to the PCs 9A, 9B whenever necessary, the servers 10A, 10B being the host devices of the respective PCs 9A, 9B.

The plurality of slave tags 1 through 6 have respective own UIDs and store encrypted tag data (tag information) that are encrypted by means of respective keys of cryptograph for the slave tags (the first keys of cryptograph). The master tag 7A has its own UID and stores the UIDs of the slave tags 1 through 3 and (different) keys of cryptograph K1 through K3 that correspond to and are correlated with the respective UIDs. Similarly, the master tag 7B has its one own UID and stores the UIDs of the slave tags 4 through 6 and (different) keys of cryptograph K4 through K6 that correspond to and are correlated with the respective UIDs. The UIDs of the slave tags and the keys of cryptograph for the slave tags are slave-tag-related information.

The keys of cryptograph for the slave tags stored in the master tags 7A, 7B are encrypted either by the key of cryptograph MK1 for the master tag 7A or by the key of cryptograph MK2 for the master tag 7B (the second keys of cryptograph). The UIDs of the slave tags 1 through 6 may also be encrypted either by the key of cryptograph MK1 or by the key of cryptograph MK2. The keys of cryptograph for the master tags are held and managed respectively by the servers 10A, 10B.

The master tags 7A, 7B can respectively transmit the UIDs of the slave tags 1 through 3 and the UIDs of the slave tags 4 through 6 stored in them and also the keys of cryptograph K1 through K3 for the slave tags and the keys of cryptograph K4 through K4 for the slave tags correlated with the UIDs and stored in them to the read/write devices 8A, 8B in response to respective requests from the read/write devices 8A, 8B. Upon receiving the UIDs of the respective slave tags and keys of cryptograph for the slave tags, the read/write devices 8A, 8B can transmit them respectively to the PCs 9A, 9B. The PCs 9A, 9B can respectively acquire the keys of cryptograph for the master tags from the server 10A, 10B and decrypt the keys of cryptograph for the slave tags acquired from the master tags. if the UIDs of the slave tags are encrypted, they are also decrypted. Then, the PCs 9A, 9B can decrypt the encrypted tag data acquired from the slave tags by means of the keys of cryptograph for the slave tags that are acquired from the master tags 7A, 7B and decrypted.

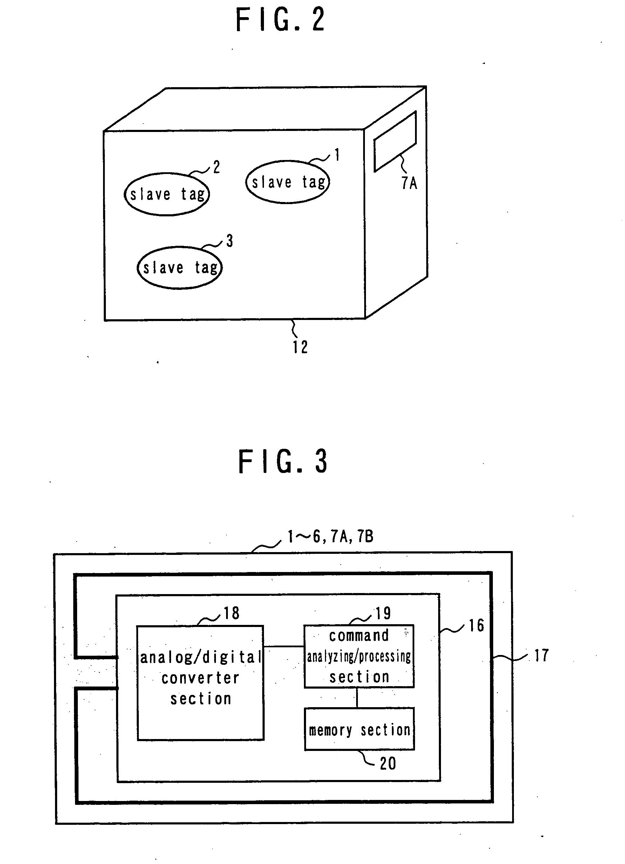

FIG. 2 is a schematic illustration of en exemplar arrangement of the master tag 7A and the slave tags 1 through 3. Referring to FIG. 2, the slave tags 1 through 3 are respectively fitted to a plurality of wears contained in a corrugated paper box 12 and the master tag 7A is fitted to one of the wall surfaces of the corrugated paper box 12. The arrangement of FIG. 1 is adapted to a situation where two such corrugated paper boxes are involved. However, normally, tens of thousands of corrugated paper boxes are held under control by a wireless tag system and the present invention can be applied to such a system with ease.

FIG. 3 is a schematic block diagram of the master tags 7A, 7B and the slave tags 1 through 6, showing the configuration thereof.

Each of the tags comprises a tag chip (IC chip) 16 and a loop antenna 17. The tag chip 16 by turn comprises an analog/digital converter 18 for converting an analog signal such as radio signal into a digital signal for internal processing, a command analyzing/processing section 19 for analyzing a command and carrying out a predetermined processing operation and a memory section 20. The memory section 20 stores the UID of the tag, the above described UIDs of the slave tags 1 through 6, the keys of cryptograph K1 through K6 that correspond to the respective UIDs and other necessary pieces of information as encrypted information. The slave tag 1 stores encrypted tag data (tag information) in addition to its own UID.

The PCs 9A, 9B, the read/write devices 8A, 8B or the PCs 9A, 9B and the read/write devices 8A, 8B in combination operates respectively as wireless tag access control devices according to the invention that can access the wireless tags (slave tags, master tag).

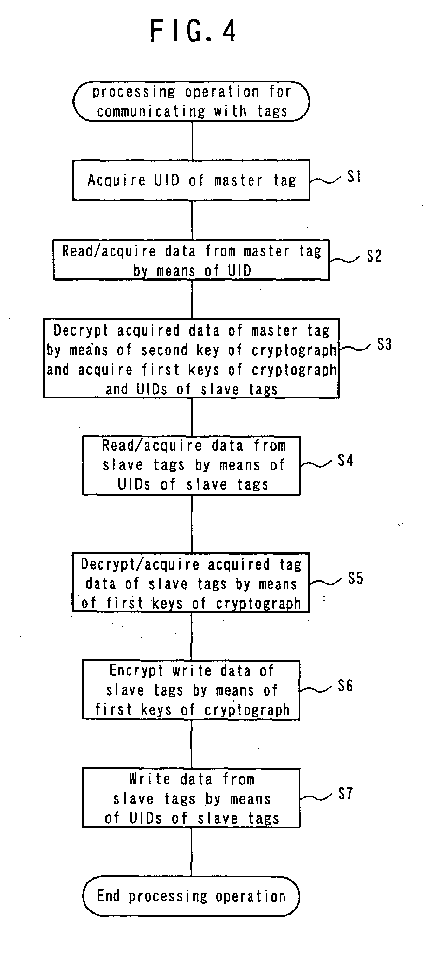

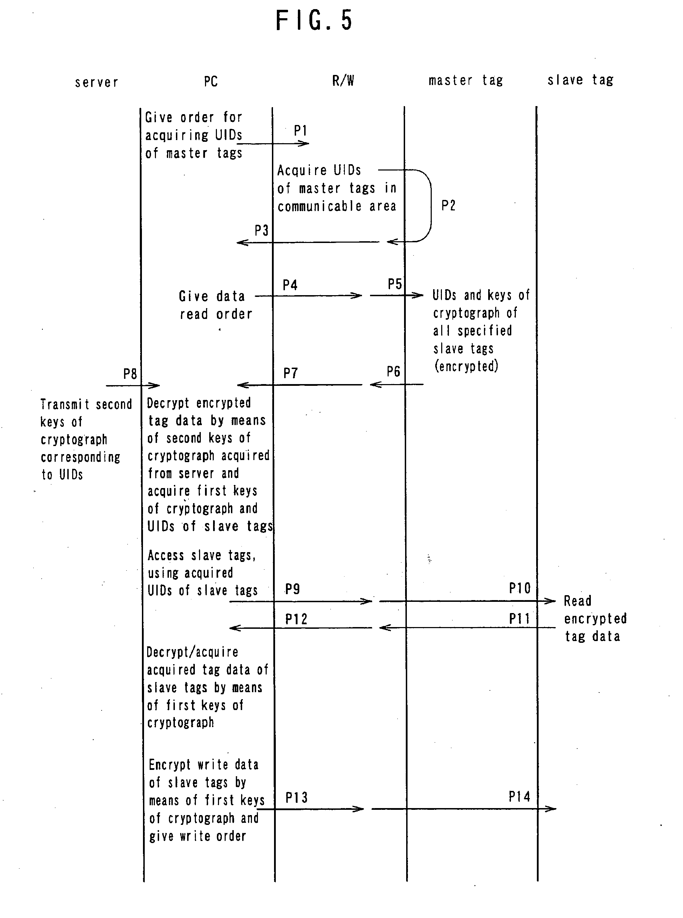

Now, the processing operation of the wireless tag access control device (PC) of the first embodiment for communicating with the slave tags will be described by referring to FIGS. 4 and 5. FIG. 4 is a flow chart of the operation of the first embodiment and FIG. 5 is a conceptual illustration of the operation of the first embodiment. In the following description, the suffixes A, B for discriminating the two groups in FIG. 1 are omitted in the following description for the simplicity of description.

Firstly, when the PC 9 communicates with any of the slave tags 1 through 6, it outputs an order for acquiring the UIDs of the master tags 7 to the read/write device 8 (P1). The read/write device 8 carries out an anti-collision processing operation and acquires the UIDs of the master tags in the communicable area (P2) and the PC 9 acquires them (P3, Step S1).

It is preferable to use a anti-collision processing command dedicated to the master tags in order to allow only the master tags 7 to participate in the anti-collision processing operation. Alternatively, a group address for identifying only the master tags may be defined for the master tags and the PC 9 may transmit the anti-collision processing command, specifying the group address.

Then, the PC 9 specifies the predetermined master tags 7 according to the acquired UIDs and outputs an order for a read operation to the read/write device 8 (P4). The read/write device 8 transfers the order for a read operation to the specified master tags 7 (P5). Each of the master tags 7 that receives the order for a read operation by turn transmits information that is encrypted by the key of cryptograph for the master tag and stored therein including the UIDs of all the slave tags and the keys of cryptograph for the slave tags to the read/write device 8 (P6). Upon receiving the information, the read/write device 8 transfers it to the PC 9. Thus, the PC 9 acquires the information on the slave tags (UIDs and the keys of cryptograph for the slave tags) from the specified master tags 7 (P7, Step S2).

The PC 9 that has acquired the information on the slave tags then acquires the keys of cryptograph for the master tags (second keys of cryptograph) from the server 10 (P8) and decrypts the encrypted keys of cryptograph for the slave tags (first keys of cryptograph) (and also the UIDs if they are encrypted) by means of the acquired keys of cryptograph for the master tags in order to acquire the UIDs of the slave tags and the corresponding keys of cryptograph for the slave tags (Step S3).

Then, the PC 9 outputs the order for a read operation relating to the predetermined slave tags by means of the acquired UIDs of the slave tags (P9) and the read/write device 8 accesses the slave tags having the UIDs (P10), acquires the encrypted tag data from the slave tags (P11) and outputs the tag data to the PC 9. Thus, the PC 9 acquires the encrypted tag data transmitted from the read/write device (P12, Step S4).

Then, the PC 9 decrypts the encrypted tag data acquired from the slave tags by means of the keys of cryptograph for the slave tags (K1 through K6) acquired from the master tags 7 and decrypted and acquires the tag data (Step S5).

When the PC 9 subsequently writes new tag data to the slave tags, it encrypts the information (tag data) by means of the same keys of cryptograph for the slave tags (Step S6) and outputs an order for writing the information onto the slave tags to the read/write device 8 (P13). The read/write device 8 transfers the order for the write operation to the slave tags (P14) to end the sequence of operation.

Note that, in the wireless tag access control device according to the present invention, the master tag information acquiring section is responsible for Step S2 and the first decrypting section is responsible for Step S3, while the slave tag data acquiring section is responsible for Step S4 and the second decrypting section is responsible for Step S5.

### Second Embodiment

In the second embodiment, the master tags are made to store the encryption system (e.g., DES/RSA system) of the keys of cryptograph for slave tags along with the keys of cryptograph for slave tags in order to further enhance the security level. When decrypting or encrypting slave tag data, the PC decrypts or encrypts, whichever appropriate, the slave tag data, using the encryption system along with the keys of cryptograph.

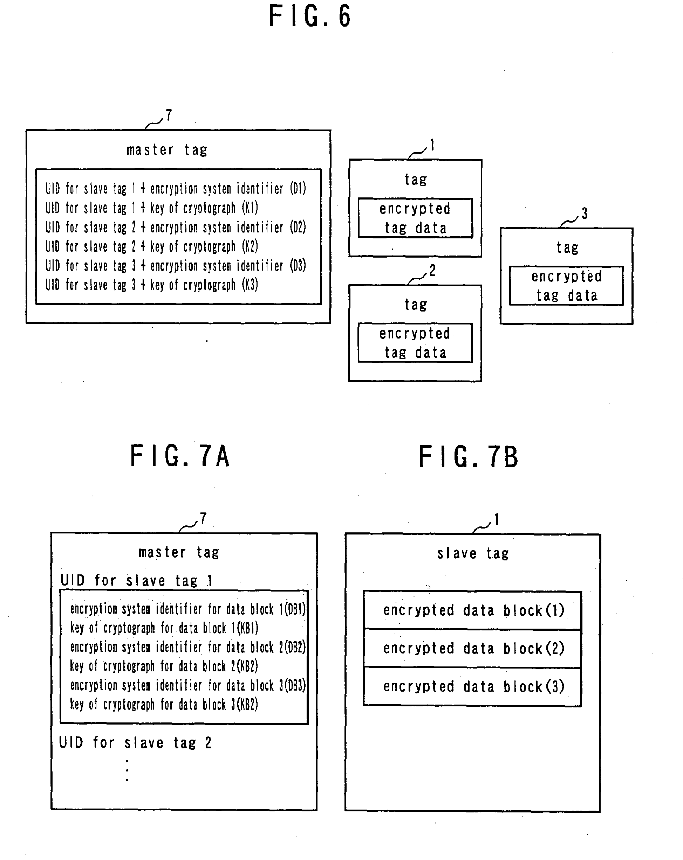

FIG. 6 is a schematic illustration of the contents of the memory of a master tag of the second embodiment. Referring to FIG. 6, the master tag 7 stores encryption system identifiers such as encryption system identifiers D1 through D3 for identifying the DES/RSA system along with the keys of cryptograph for slave tags K1 through K3 so as to correspond to the UIDs of the respective slave tags. Preferably, the encryption system identifiers D1 through D3 for slave tags are also encrypted by means of a key of cryptograph for a master tag as described above for the first embodiment.

### Third Embodiment

FIGS. 7A and 7B are schematic illustrations of the contents of the memory of a master tag and those of the memory of a slave tag of the third embodiment. Referring to FIGS. 7A and 7B, the slave tag data (slave tag information) is divided into a plurality of blocks (1) through (3) and the key of cryptograph for the slave tag is encrypted for each of the blocks by means of a predefined key of cryptograph for the data block and stored in the memory section of the slave tag in order t further enhance the security level. On the other hand, the master tag stores the encryption system identifiers for the data blocks (DB1 through DB3) and the keys of cryptograph for the data blocks (KB1 through KB3) so as to correspond to the slave tag.

With the above described arrangement, the PC 9 decrypts the encryption system identifiers for the data blocks acquired from the master tag and the keys of cryptograph for the data blocks by means of the key of cryptograph for the master tag acquired from the server for each block. Then, it decrypts the encrypted tag data acquired from the slave tags by means of the encryption system identifiers for the data blocks and the keys of cryptograph for the data blocks decrypted on a block by block basis.

Similarly, when writing data to the slave tags, the data is divided into blocks and encrypted by means of the keys of cryptograph for slave tags and the encryption system on a block by block basis and written to the slave tags.

The preferred embodiments of the present invention are described above. Now, the processing operation for updating the data (UIDs and keys of cryptograph for slave tags) of the slave tags registered in the master tag(s) will be described below.

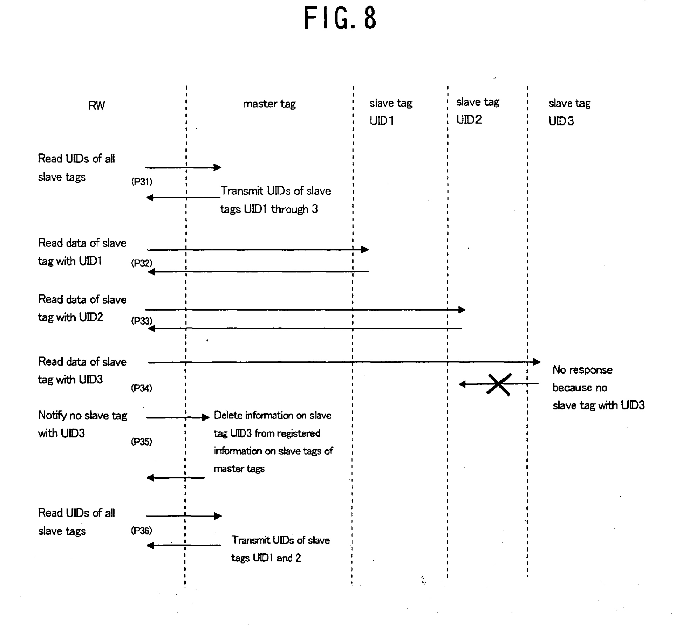

Referring to FIG. 8, the data updating processing operation may be repeated at regular time intervals (or at a predetermined clock time or predetermined clock times). The PC acquires the UIDs of the slave tags from the master tag by way of the read/write device (P31) and sequentially reads the data of the slave tags, using the UIDs (P32 through P34). If a slave tag (UID3 in the illustrated instance) goes out of control, no acknowledgement can be received from the slave tag with the UID (P34). Therefore, the PC decides that the slave tag has gone out of control of the PC (the commodity carrying the slave tag may have been moved to the outside) and issues an order for erasing the UID to the master tag. Upon receiving the order, the master tag deletes the UID of the slave tag (P35). Then, the processing operation described above for the preferred embodiments is carried out for the remaining slave tags (P36).

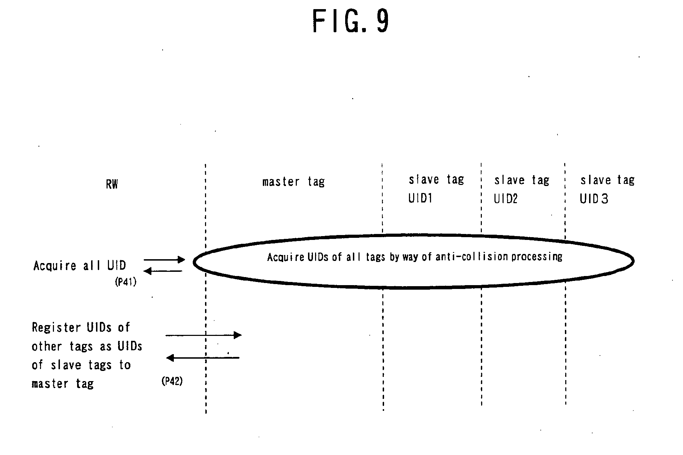

Now, the processing operation of initializing the slave tags and the master tag(s) will be described below by referring to FIG. 9. The PC carries out an anti-collision processing operation by way of the read/write device and acquires the UIDs of all the tags including the slave tags and the master tag(s) (P41). As the PC identifies the UID of the master tag (assuming that the master tag is provided with a UID that can be discriminated from the UIDs of the other tags), it handles all the tags with the UIDs other than the UID of the master tag as slave tags allocates the keys of cryptograph for slave tags to the respective UIDs, encrypt the keys of cryptograph for slave tags along with the UIDs by means of the second key of cryptograph, and writes and stores the UIDs in the master tag (P42). When an encryption system is used, it is also stored.

After the initialization, the information in the master tag can be updated in a similar manner when a slave tag is added. More specifically, an anti-collision processing operation is carried out for the slave tags and, if it is determined that there is a UID of a slave tag that is not registered in the master tag, a key of cryptograph for a slave tag is assigned to it and the key of cryptograph for the slave tag is encrypted along with the UID by means of the second key of cryptograph and written to and stored in the master tag.

The present invention is described in detail by way of preferred embodiments. Thus, according to the invention, it is easy to keep and manage keys of cryptograph with an enhanced level of security. Additionally, the UIDs of the slave tags are stored in the master tags so that they can be acquired by means of an anti-collision processing operation of the master tags and the slave tags can be accessed by using the UIDs. Therefore, it is no longer necessary to carry out an anti-collision processing operation for all the slave tags and hence the number of tags that participate in the anti-collision processing operation can be reduced dramatically and hence the present invention can carry out the anti-collision processing operation remarkably quickly.

The present invention is described above by way of preferred embodiments. Thus, the present invention provides a wireless tag access control program for causing the computer of a wireless tag access control device according to the invention to execute the processing operation of the flow chart (FIG. 4) described above. More specifically, such a program can be executed by the computer of a wireless tag access control device according to the invention when it is stored in a computer-readable recording medium. Computer-readable recording mediums that can be used for the purpose of the present invention include transportable recording mediums such as CD-ROMs, flexible disks, DVD disks, magnetic optical disks and IC cards along with data bases that retain computer programs, other computers, their data bases and transmission mediums on communication lines.

## Claims

1. A wireless tag system comprising:
a plurality of wireless slave tags which store tag data encrypted by means of a first key of cryptograph;
a plurality of wireless master tags, each which store the first keys of cryptograph encrypted by means of the second key of cryptograph; and
a wireless tag access control device which accesses each of said master tags and decrypting said first keys of cryptograph acquired from said master tags by means of said second key of cryptograph and then said tag data acquired from said slave tags by means of the decrypted first keys of cryptograph.

2. The system according to claim 1, wherein said master tags store said first keys of cryptograph and the UIDs (unique IDs) of said slave tags by correlating them.

3. The system according to claim 2, wherein the UIDs of said slave tags are encrypted by means of said second key of cryptograph and said wireless tag access control device can decrypt the UIDs of said slave tags along with said first keys of cryptograph by means of said second keys of cryptograph and access said slave tags, using the decrypted UIDs.

4. The system according to claim 1, wherein said wireless tag access control device can acquire the UIDs of said master tags and then said second keys of cryptograph on the basis of the acquired UIDs.

5. The system according to claim 1, wherein
the encryption system using said first keys of cryptograph is encrypted by means of said second keys of cryptograph along with said first keys of cryptograph and stored in said master tags; and
said wireless tag access control device is adapted to decrypt said encryption system by means of said second keys of cryptograph along with said first keys of cryptograph and decrypt the tag data of said slave tags by means of said decrypted first keys of cryptograph and said encryption system.

6. The system according to claim 1, wherein, when said wireless tag access control device accesses the slave tags, said wireless tag access control device acquires the UIDs of the master tags and then acquires the second keys of cryptograph on the basis of the acquired UIDs of the master tags and, at the same time, it accesses said master tags, using the UIDs, and acquires the UIDs of said slave tags and the first keys of cryptograph stored in the master tags so as to decrypt at least the first keys of cryptograph by means of said second keys of cryptograph, access the slave tags, using the acquired UIDs of the slave tags, acquires the tag data and decrypt the acquired tag data by means of said first keys of cryptograph decrypted by means of said second keys of cryptograph.

7. The system according to claim 1, wherein
the tag data stored in said slave tags are divided into a plurality of blocks and a first key of cryptograph is defined for each block; and
said first keys of cryptograph are stored in said master tags so as to correspond to each of said plurality of blocks and encrypted by means of the second keys of cryptograph defined for the respective blocks.

8. The system according to claim 7, wherein
the encryption system using said first keys of cryptograph and defined for each of said blocks is stored in said master tags along with the first keys of cryptograph so as to correspond to each of said plurality of blocks; and
said wireless tag access control device acquires said first keys of cryptograph and said encryption system by decrypting them by means of said second keys of cryptograph defined so as to correspond to each of said blocks and then decrypts the tag data of said slave tags by means of said first keys of cryptograph and said encryption system that are decrypted.

9. The system according to claim 1, wherein said wireless tag access control device encrypts the tag data to be stored in said slave tags by means of said first keys of cryptograph that are acquired from said master tags and decrypted.

10. A wireless tag access control device adapted to access a plurality of wireless tags including slave tags which store tag data encrypted by means of the first keys of cryptograph and a plurality of master tags which store slave-tag-related information including the UIDs of the slave tags and said first keys of cryptograph, at least said first keys of cryptograph being encrypted by means of the second keys of cryptograph, said device comprising:
a master tag information acquiring section which accesses said master tags and acquiring the slave-tag-related information stored in said master tags;
a first decrypting section which decrypts the information encrypted by means of said second keys of cryptograph out of said slave-tag-related information acquired by said master tag information acquiring section by means of the second keys of cryptograph acquired to correspond to said master tags;
a slave tag data acquiring section which accesses said slave tags by means of said UIDs of the slave tags acquired by said master tag information acquiring section or decrypted and acquired by said first decrypting section and acquiring the tag data encrypted by means of said first keys of cryptograph; and
a second decrypting section which decrypts the tag data acquired by said slave tag data acquiring section by means of the first keys of cryptograph decrypted by means of said first decrypting section.

11. The device according to claim 10, wherein
said slave-tag-related information stored in the master tags includes the encryption system using said first keys of cryptograph as encrypted by means of said second keys of cryptograph; and
said first decrypting section decrypts said first keys of cryptographs along with said encryption system by means of said second keys of cryptograph, whereas
said second decrypting section decrypts the tag data acquired by said slave tag data acquiring section, using said encryption system along with said first keys of cryptograph.

12. A wireless tag access control method adapted to access a plurality of wireless tags including slave tags which store tag data encrypted by means of the first keys of cryptograph and a plurality of master tags which store slave-tag-related information including the UIDs of the slave tags and said first keys of cryptograph, at least said first keys of cryptograph being encrypted by means of the second keys of cryptograph, said method comprising:
a master tag information acquiring step which accesses said master tags and acquiring the slave-tag-related information stored in said master tags;
a first decrypting step which decrypts the information encrypted by means of said second keys of cryptograph out of said slave-tag-related information acquired in said master tag information acquiring step by means of the second keys of cryptograph acquired to correspond to said master tags;
a slave tag data acquiring step which accesses said slave tags by means of said UIDs of the slave tags acquired in said master tag information acquiring step and acquiring the tag data encrypted by means of said first keys of cryptograph; and
a second decrypting step which decrypts the tag data acquired in said slave tag data acquiring step by means of the first keys of cryptograph decrypted in said first decrypting step.

13. The method according to claim 12, wherein
said slave-tag-related information stored in the master tags includes the encryption system using said first keys of cryptograph as encrypted by means of said second keys of cryptograph; and
said first decrypting step is adapted to decrypt said first keys of cryptograph along with said encryption system by means of said second keys of cryptograph, whereas
said second decrypting step is adapted to decrypt the tag data acquired in said slave tag data acquiring step, using said encryption system along with said first keys of cryptograph.

14. A wireless tag access control program which drives a computer to execute a wireless tag access control method adapted to access a plurality of wireless tags including slave tags which store tag data encrypted by means of the first keys of cryptograph and a plurality of master tags which store slave-tag-related information including the UIDs of the slave tags and said first keys of cryptograph, at least said first keys of cryptograph being encrypted by means of the second keys of cryptograph, said program comprising:
a master tag information acquiring step which accesses said master tags and acquiring the slave-tag-related information stored in said master tags;
a first decrypting step which decrypts the information encrypted by means of said second keys of cryptograph out of said slave-tag-related information acquired in said master tag information acquiring step by means of the second keys of cryptograph acquired to correspond to said master tags;
a slave tag data acquiring step which accesses said slave tags by means of said UIDs of the slave tags acquired in said master tag information acquiring step or decrypted and acquired in said first decrypting step and acquiring the tag data encrypted by means of said first keys of cryptograph; and
a second decrypting step which decrypts the tag data acquired in said slave tag data acquiring step by means of the first keys of cryptograph decrypted in said first decrypting step.

15. The program according to claim 14, wherein
said slave-tag-related information stored in the master tags includes the encryption system using said first keys of cryptograph as encrypted by means of said second keys of cryptograph; and
said program drives a computer to execute said method in which;
said first decrypting step is adapted to decrypt said first keys of cryptographs along with said encryption system by means of said second keys of cryptograph; and
said second decrypting step is adapted to decrypt the tag data acquired in said slave tag data acquiring step, using said encryption system along with said first keys of cryptograph.

16. A wireless tag comprising a wireless antenna and a memory section and adapted to be accessed by a read/write device by means of a wireless signal;
said memory section which store:
UIDs relating to other wireless tags accessible for said read/write device; and
the first keys of cryptograph which decrypts the tag data stored in the wireless tags having said UIDs and encrypted by means of the second keys of cryptograph.

17. The wireless tag according to claim 16, wherein said memory section stores the encryption system using said first keys of cryptograph.
